**Europäisches Patentamt**

**European Patent Office**

**Office européen des brevets**

(19)

(11) Veröffentlichungsnummer: **0 078 891**
**B1**

(12) # EUROPÄISCHE PATENTSCHRIFT

(45) Veröffentlichungstag der Patentschrift:
**29.01.86**

(21) Anmeldenummer: **82107511.6**

(22) Anmeldetag: **18.08.82**

(51) Int. Cl.⁴: **B 21 D 11/20,** B 21 D 47/00,
B 64 C 3/20

(54) **Verfahren und Einrichtung zur Biegeumformung von Paneelen, insbesondere für die Beplankung der Zelle von Luftfahrzeugen.**

(30) Priorität: **07.10.81 DE 3139836**
**14.10.81 DE 8129965 U**

(43) Veröffentlichungstag der Anmeldung:
**18.05.83 Patentblatt 83/20**

(45) Bekanntmachung des Hinweises auf die Patenterteilung:
**29.01.86 Patentblatt 86/5**

(84) Benannte Vertragsstaaten:
**DE FR GB IT**

(56) Entgegenhaltungen:
**CH - A - 624 318**
**DE - B - 1 197 841**
**DE - B - 2 432 929**
**US - A - 2 980 156**

(73) Patentinhaber: **DORNIER GMBH, Postfach 1420,**
**D-7990 Friedrichshafen (DE)**
Patentinhaber: **WALTER ECKOLD GmbH & Co. KG**
**Vorrichtungs- und Gerätebau, D-3424 St.**
**Andreasberg-Sperrluttertal (DE)**

(72) Erfinder: **Reccius, Helmut, Ing. grad., Dreyerstrasse 5,**
**D-8000 München 21 (DE)**
Erfinder: **Pönitzsch, Werner, Dipl.-Ing.,**
**Diamantstrasse 13, D-7990 Friedrichshafen (DE)**
Erfinder: **Eckold, Gerd-Jürgen, Silberhütte 11, D-3424 St.**
**Andreasberg (DE)**
Erfinder: **Maass, Hans, Germelmannstrasse 12,**
**D-3422 Bad Lauterberg (DE)**

(74) Vertreter: **Landsmann, Ralf, Dipl.-Ing., Kleeweg 3,**
**D-7990 Friedrichshafen 1 (DE)**

## Beschreibung

Die vorliegende Erfindung betrifft ein Verfahren zur Biegeumformung von Paneelen aus elastisches und plastisches Umformverhalten aufweisenden Werkstoffen, z.B. Aluminium, insbesondere für die Beplankung der Zelle von Luftfahrzeugen, die aus einer glatten Behäutungsaussenseite mit einseitigen, rechtwinklig zu der Behäutung angeordneten Versteifungsrippen besteht.

Beispielsweise müssen Flugzeuge, auch der allgemeinen Luftfahrt, hohen Anforderungen genügen. Besondere Bedeutung kommt dabei einer preisgünstigen Fertigung zu. Die gestellten Forderungen nehmen Einfluss auf das Strukturkonzept. Insbesondere in bezug auf die Tragflügel, aber auch auf Ruder oder andere Teile der Flugzeugzelle, sind bei der wirtschaftlichen Fertigung von gewölbten Beplankungsteilen eine Anzahl von Schwierigkeiten zu überwinden. Tragflügel für Flugzeuge der allgemeinen Luftfahrt wurden bisher in bekannter Weise in genieteter Haut-Stringer-Bauweise, auch differenzierte Bauweise genannt, hergestellt.

Neuere Entwicklungen haben dazu geführt, mittels spangebender Bearbeitung Paneele mit Stringern als Integralteil herzustellen. Schliesslich wurde dazu übergegangen, gleichzeitig zu den Stringern auf die gleiche Weise auch die Rippengurte zu bilden.

Aus dieser Bauweise resultieren wesentliche Vorteile, die unter anderem erlauben, die Beplankung bzw. die Behäutung an jeder Stelle in der minimal errechneten Bemessung herzustellen.

Zur Ausführung des genannten, spangebenden Arbeitsverfahrens, werden moderne Maschinen, z.B. Fräsmaschinen bekannter Bauart, verwendet.

Besondere Schwierigkeiten der Umformung bestehen bei Bauteilen mit integrierten, sich überkreuzenden Versteifungsrippen, die aufgrund der hohen Steifigkeit einer Umformung erheblichen Widerstand entgegensetzen. Zum Umformen derartiger Paneele stehen eine Reihe von Arbeitsverfahren zur Verfügung, so z.B. das Streckziehen, das Kugelstrahlen, das Walzen und das Wippen.

Streckziehen solcher Paneele ist bei unterschiedlichen Bauteildicken (Behäutungsdicke, Stringerdicke und Rippengurtdicke), wie sonst bei Flugzeugteilen zur Gewichtseinsparung üblich, infolge zu starker örtlicher Umformung, sowie teurer Maschinen und Werkzeuge nicht möglich.

Kugelstrahlen zur Umformung setzt Mindestdicken der Bauteilbehäutung voraus, um die durch dieses Verfahren notwendigen Längenänderungen der Behäutung bewirken zu können. Dem Einsatz von Walz- bzw. Wippverfahren zur Umformung stehen dabei erforderliche konstruktive Einschränkungen für den Aufbau der Paneele entgegen. Es bestehen ferner Probleme bei der Herstellung nichtzylindrischer oder sphärisch gekrümmter Bauteile. Ferner bestehen Schwierigkeiten bei Bauteilen, bei denen die Rippengurte und Stringer keine gleiche Bauhöhe aufweisen.

Es ist ein Verfahren in Verbindung mit einer Vorrichtung zum Biegen von Wellblechen bekannt geworden, wobei die Wellbleche quer zur Wellung stufenweise gebogen werden. Dabei ist Voraussetzung, dass die Versteifungsstegen vergleichbaren Wellungen trapezförmig geneigte Seitenwände aufweisen. Gegenüber dem Bekannten geht die Erfindung von Strukturelementen aus, die als Integralteile aus einem Behäutungspaneel und einander überkreuzenden Versteifungsrippen bestehen, wobei die Paneelaussenseite eine für die spätere Umströmung entsprechende Güte aufweisen muss.

Ferner ist ein Verfahren in Verbindung mit einer Vorrichtung zur Biegeumformung von Honigwabenmatten bekannt geworden, wobei mittels eines zangenartigen Werkzeuges in die Zellenwände Sicken oder Wellungen eingedrückt werden, die von einer maximalen Tiefe auf der einen Seite zur gegenüberliegenden Seite der Zellen auslaufen.

Aufgabe der Erfindung ist die Schaffung eines Verfahrens und einer Einrichtung zur spanlosen Umformung von Paneelen oder Platten in eine zylindrische oder sphärische Form, insbesondere von Paneelen mit integrierten, einander überkreuzenden Versteifungsrippen (Rippengurte, Stringer oder dergleichen) unabhängig von sich ändernder Dicke der Behäutung bzw. der Versteifungsrippen, sowie unabhängig von der Steifigkeit, Gurthöhe bzw. Gurtbreite. Es ist ferner Aufgabe der vorliegenden Erfindung, eine Einrichtung zu schaffen, die gegenüber bekannten Maschinen und Geräten äusserst einfach aufgebaut und relativ billig herzustellen ist und die von einer Bedienungsperson als mobiles Gerät von Hand geführt bzw. bedient werden kann. Ausserdem soll die Umformeinrichtung bzw. das Umformverhalten eine hohe Herstellungsqualität bezüglich der Paneelaussenfläche und der Massgenauigkeit ermöglichen.

Die gestellte Aufgabe ist erfindungsgemäss dadurch gelöst, dass die Umformung der Paneele allein durch eine plastische, geradlinige Längenänderung der sich in Richtung des Wölbungsverlaufes erstreckenden Versteifungsrippen bewirkt wird, wobei die Einleitung der Umformkräfte an den Versteifungsrippen in einem solchen Abstand von der Behäutung erfolgt, dass das Paneel einem Spannungsverlauf mit innerhalb der Behäutung liegender neutraler Faser unterworfen ist. Damit werden die Paneele gezielt in vorgegebenen Massen umgeformt, wobei nicht das gesamte Bauteil, sondern die Versteifungsrippen an ausgewählten Stellen einer Stauch- oder auch einer Streckbeanspruchung unterworfen werden. Dadurch, dass der Kraftangriff an den Rippengurten für die Umformung in einem Abstand von der Behäutung des Paneels erfolgt, bei dem die neutrale Faser im Bereich der verkürzten Rippengurte zumindest annähernd in der Mitte der Dicke der Behäutung liegt wird erreicht, dass die Behäutung während des Biegevorganges und im Fertigzustand keinen oder nur geringen Biegespannungen ausgesetzt ist und dadurch einerseits eine einwandfreie Aussenfläche ohne Wellungen gebildet und andererseits eine Materialbeeinträchtigung in bezug auf Ermüdungsverhalten durch den Biegevorgang vermieden wird.

Die Ansprüche 2 bis 9 definieren zur Durchführung des Verfahrens bestimmte und geeignete Einrichtungen.

Es ist zu erkennen, dass mittels des Verfahrens bzw. der Einrichtung ein hohes Mass an Flexibilität gewährleistet ist. Der Abstand der Klemmbackenpaare bestimmt den Längenabschnitt der Rippen, auf den die Verformung zu verteilen ist, und die Begrenzungseinrichtung legt das Mass der Stauchung oder Streckung fest, dem dieser Rippenabschnitt zu unterwerfen ist. Der Angriff kann einseitig am Paneel erfolgen, an dem selbst keinerlei besondere Vorkehrungen zu treffen sind. Indem einer der Träger selbst als Hydraulikzylinder, vorzugsweise als Hochdruckhydraulikzylinder ausgebildet wird, kann die Vorrichtung platzsparend und gegebenenfalls relativ zu einem grossen zu verformenden Paneel beweglich ausgebildet werden.

In der Zeichnung ist ein Ausführungsbeispiel einer Umformeinrichtung gemäss der Erfindung dargestellt. Die Ausführung ist nachfolgend beschrieben.

In der Zeichnung zeigt:

Fig. 1 schematisiert und perspektivisch dargestellt, ein Paneel in gebogenem Endzustand,

Fig. 2 die Umformeinrichtung schematisiert in Seitenansicht und teilweise längsgeschnitten dargestellt,

Fig. 3 eine teilweise Draufsicht auf die Umformeinrichtung gemäss Fig. 2,

Fig. 4 in einem Ausschnitt aus Fig. 1 einen Teil des Paneels in einem Querschnitt nach der Linie IV-IV der Fig. 1 mit beispielsweisem, unterschiedlichen Angriff der Einrichtung an den Rippen des Paneels,

Fig. 5 in einem Spannungsdiagramm die Spannungsverhältnisse am Paneel und

Fig. 6 in schematischer Darstellung eine mit der Einrichtung zusammenwirkende Zusatzvorrichtung in einem Längsschnitt bzw. einer Ansicht von oben.

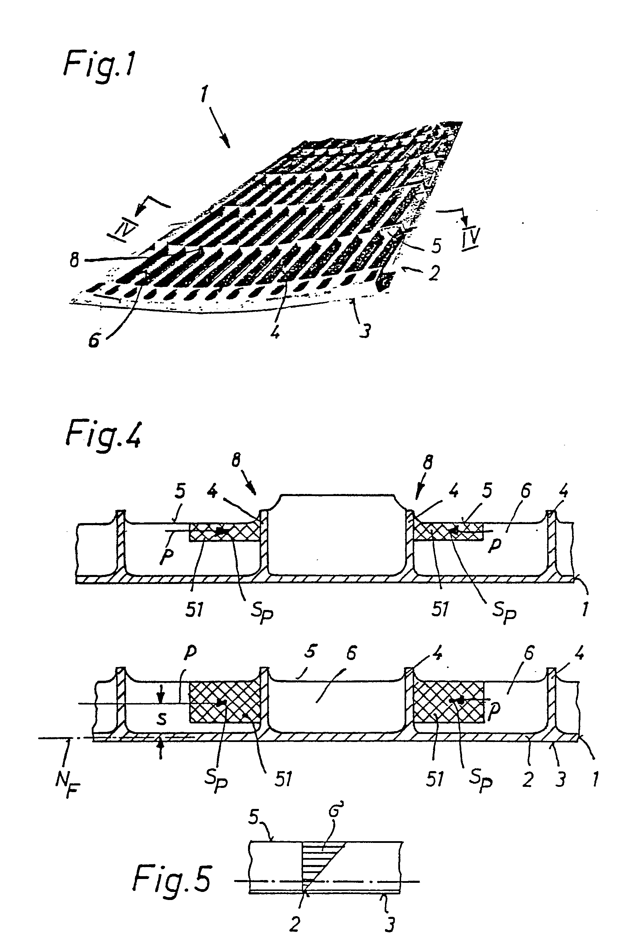

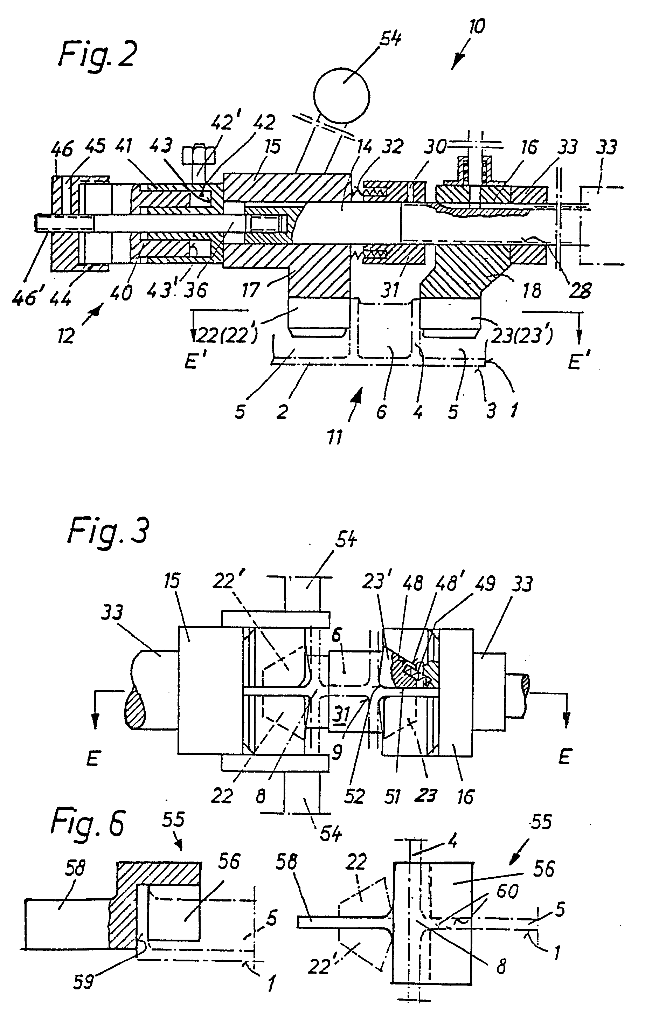

Als Beispiel für ein mittels der Umformeinrichtung umformbares Werkstück ist gemäss Fig. 1 ein Paneel 1 gezeigt, welches eine der zu einem Flugzeugtragflügel gehörenden Baukomponenten darstellt. Das Paneel 1 ist gebildet aus der durchgehenden Behäutung 2 mit ihrer Aussenfläche 3 und den hier rechtwinklig zueinander verlaufenden, mit der Behäutung 2 ein Integralteil bildenden Verstärkungsrippen 4 bzw. 5. Nachfolgend sind die längs des Paneels verlaufenden Verstärkungsrippen 4 als Stringer und die dazu rechtwinklig verlaufenden Verstärkungsrippen als Rippengurte 5 bezeichnet. Die Verstärkungsrippen und die Behäutung sind hergestellt durch kassettenförmige Ausfräsungen 6 aus einem Rohteil, wobei die Rippendicke bzw. die Dicke der Behäutung, ebenso wie die Höhe der Rippen und deren Dicke, entsprechend den zu erwartenden Belastungen des Paneels differieren kann. Die Überschneidungen der Stringer und Rippengurte bilden Knotenstellen 8, wobei für den Übergang der Rippengurte bzw. Stringer ineinander Ausrundungen 9 gebildet sind (Fig. 3).

Die nachfolgend beschriebene Ausführung einer Umformeinrichtung ist jedoch in ihrer Anwendung nicht auf die Biegeumformung von Bauteilen — wie vorausgehend beschrieben — beschränkt. Sie ist vielmehr auch für das Umformen in anderer Art gestalteter, mit Verstärkungsrippen als Integralteil versehener Paneele geeignet, so z.B. für Paneele, die Rippen nur in Richtung der Umformung besitzen. Ferner ist die Einrichtung auch einsetzbar für die Umformung von Paneelen mit auf die Behäutung aufgenieteten oder in andere Weise aufgebrachten Verstärkungsrippen.

Die mit 10 bezeichnete Umformeinrichtung setzt sich zusammen aus einer Biegeeinheit 11 und einer hydraulisch betätigbaren Stelleinheit 12. Die Biegeeinheit 11 erhält eine Trägerachse 14, die zur Aufnahme zweiter Träger 15 bzw. 16 dient. Die Träger 15, 16 sind auf der Trägerachse 14 in Achsrichtung relativ zueinander verstellbar und arretierbar angeordnet und besitzen sich in gleicher Richtung senkrecht von der Trägerachse in der Ebene E'-E' weggerichtet erstreckende Tragarme 17 bzw. 18. Die Tragarme bilden Führungen, die in einer gemeinsamen Ebene E-E liegen und zur Aufnahme in dieser Ebene beweglicher Klemmbackenpaare 22, 22' bzw. 23, 23' dienen. Die Ebene E'-E' ist dabei senkrecht zu einer Ebene E-E, welche die Trägerachse 14 enthält und durch die Tragarme 17 bzw. 18 gelegt ist. Zwischen den Trägern 15 bzw. 16 ist auf der Trägerachse 14 mittels Gewinde 28 axial verstellbar und mittels einer Arretierschraube 30 feststellbar ein Hubbegrenzungsteil 31 angeordnet. Der Träger 16 ist axial beweglich auf der Trägerachse 14 angeordnet und stützt sich an einem Ankerteil 33, welches mittels dem Gewinde 28 auf das freie Ende der Trägerachse 14 aufschraubbar ist, ab. Die Trägerachse 14 weist an ihrem anderen Ende ein Verlängerungsteil 36 auf, das den Tauchkolben 40 der hydraulisch betätigbaren Stelleinrichtung 12 aufnimmt. Der Kolben 40 greift ein in ein Druckzylinderteil 41 und zwar so, dass eine Druckzylinderkammer 42 gebildet ist. Die vom Druckmittel beaufschlagten Flächen des Kolbens 40 bzw. des Zylinderteils 41 sind mit 43' bzw. 43 bezeichnet. Der Kolben 40 trägt an seinem freien Ende mittels Gewinde 44 ein Mutterteil 46, das seinerseits mittels Gewinde 46' auf das Verlängerungsteil 36 der Trägerachse 14 aufgeschraubt ist. Das Mutterteil 46 ist mittels einer Schraube 45 gegen Drehung gesichert. Das Druckzylinderteil 41 stützt sich in axialer Richtung am Träger 15 ab. In die Druckzylinderkammer 42 mündet eine Druckmittelzu- bzw. Druckmittelrückleitung 42', die über eine hier der Vereinfachung halber nicht dargestellte Druckmittelsteuerung wahlweise an eine Druckquelle bzw. ein Druckmittelreservoir anschliessbar sind. Zwischen dem Träger 15 und dem Hubbegrenzer 31 sind in axialer Richtung wirkende Schraubendruckfedern 32 unter Vorspannung eingesetzt, welche die Träger 15 bzw. 16 bei druckloser Stelleinheit 12 in Öffnungsstellung halten.

Für die Klemmbacken 22, 22' bzw. 23, 23' sind an den Tragarmen 17 bzw. 18 geneigte Führungsflächen 48 gebildet. Die Führungsflächen 48 je eines Klemmbackenpaares 22, 22' bzw. 23, 23' sind so gegeneinander geneigt angeordnet, dass mit den entsprechend geneigten Führungsflächen 48' der Klemmbacken bei einer Klemmbackenbelastung zum Zwecke des Stauchens der Rippengurte 5 die Klemmbacken eine die Rippengurte 5 zwischen sich fassende Klemmbewegung ausführen. Die Klemmbacken 22, 22' bzw. 23, 23' stehen zur Rückführung in die Ausgangsstellung je unter der Wirkung einer Druckfeder 49. Der Verstellweg der Klemmbacken gegenüber den Tragarmen ist durch hier nicht dargestellte Anschläge begrenzt. Die einander zugekehrten und zueinander parallelen Klemmflächen der Klemmbacken sind mit 51 bezeichnet, wobei diese Klemmflächen in Abrundungen 52 für die Anlage an den Hohlkehlenflächen 9 der Knotenstellen 8 der Verstärkungsrippen 4 und 5 übergehen. Die Einrichtung ist ferner mit Handgriffen 54 für die Handhabung durch eine Bedienungsperson versehen.

In Fig. 4 ist das Paneel 1 teilweise in einem Querschnitt nach der Linie IV-IV der Fig. 1 durch die Stringer 4 dargestellt. Mit den Pfeilen P ist hier der Kraftangriff der Klemmbacken 22, 22' bzw. 23, 23' im Abstand s von der neutralen Faser $N_F$ der Behäutung im Flächenschwerpunkt $S_P$ angedeutet, und die Lage der Klemmflächen 51 der Klemmbacken 22, 22' bzw. 23, 23' während ihres seitlichen Angriffes an den Rippengurten 5 am Paneel 1 ist gekreuzt schraffiert gekennzeichnet.

Das Diagramm Fig. 5 lässt die auftretenden Biegespannungen bzw. Druckspannungen in der Behäutung 2 bzw. den Rippengurten 5 erkennen. Wie das Diagramm zeigt, treten dabei in der Behäutung 2 durch die besondere Wahl des Abstandes des Angriffes der Klemmflächen 51 der Klemmbacken im Abstand s von der Mitte der Behäutungsdicke ($N_F$ = neutrale Faser) in der Behäutung keine oder vernachlässigbar kleine Zug- bzw. Druckspannungen auf. Die Umformeinrichtung ist dabei so einstellbar (Lage des Schwerpunkts), dass die neutrale Faser $N_F$ auch bei Dickenänderungen stets einen gleichen Abstand zur Aussenfläche 3 des Paneels aufweist und somit Wellungen der Fläche 3 während des Umformvorganges vermieden werden.

In Fig. 6 schliesslich ist ein Einsatzstück 55 gezeigt, welches für Paneele Verwendung findet, deren Rippengurte 5 an den Stringern 4 enden, so dass ein Angriff der Umformeinrichtung 10 unmittelbar am Werkstück 1 nicht möglich ist.

Das Einsatzstück 55 besitzt Backen 56, die die Rippengurte 5 und die Stringer 4 übergreifen. Mit einer Fläche 59 erfolgt die Anlage des Einsatzstückes 55 an der Aussenfläche der Stringer 4 im Bereich der Knotenstellen 8. Zur Führung des Einsatzstückes 55 an den Rippengurten 5 sind Anlageflächen 60 gebildet, die an den Seitenflächen der Gurte 5 anliegen. Für den Angriff der Klemmbacken 22, 22' bzw. 23, 23' weist das Einsatzstück 55 einen Ansatzsteg 58 in Lage und Abmessung entsprechend einem Rippengurt 5 auf.

Die Wirkungsweise des Verfahrens bzw. der Umformeinrichtung ist wie folgt:

Die von Hand geführte Umformeinrichtung 10 wird durch entsprechende Verstellung der Träger 15 bzw. 16 gegenüber der Trägerachse 14 auf die Abmessungen des Paneels 1, d.h. auf die Abstände der Stringer 4 so eingestellt, dass die Klemmbackenpaare 22, 22' bzw. 23, 23' im Abstand voneinander am Rippengurt 5 mit ihren Klemmflächen 51 beidseitig angreifen. Es wird ferner das Hubbegrenzteil 31 mittels seines Gewindes auf der Trägerachse 14 für den Anschlag des Trägerteils 15 axial eingestellt und arretiert. Die Tragarme 17 bzw. 18 greifen in die kassettenförmigen Ausfrägungen 6 des Paneels 1 im Bereich der durch die sich kreuzenden Stringer 4 bzw. Rippengurte 5 gebildeten Knotenstellen 8 ein. Mittels der Druckmittelsteuereinrichtung wird der Druckzylinderkammer 42 der Stelleinheit 12 für den Umformvorgang Druckmittel zugeführt. Durch den sich in der Druckzylinderkammer 42 aufbauenden Druckmitteldruck wird über den Druckzylinder 41 und den an der Trägerachse 14 feststellbaren Kolben 40 eine Relativbewegung zwischen den Trägern 15 bzw. 16 bewirkt. Mit der Anlage der Klemmflächen 51 der Klemmbackenpaare 22, 22' bzw. 23, 23' an den Knotenstellen 8 des Paneels 1 werden die Klemmbackenpaare durch ihre geneigten Führungsflächen 48 und die entsprechenden Gegenflächen 48' und den Tragarmen 17 bzw. 18 an die Seitenflächen des Rippengurtes 5 angedrückt. Dabei entsteht Reibschluss zwischen den Klemmflächen 51 der Klemmbackenpaare und den Seitenflächen des Rippengurtes 5. Die bleibende plastische Verkürzung des Rippengurtes 5 findet dabei in einem Abschnitt je zwischen zwei Stringern 4 statt. Nach abgeschlossenem Stauchvorgang wird mittels der nicht dargestellten Druckmittelsteuereinrichtung die Druckzylinderkammer 42 drucklos geschaltet und dadurch, sowie durch die Wirkung der Federn 32, die Träger 15 bzw. 16 voneinander wegbewegt. Mittels der Druckfedern 49 zwischen den Klemmbacken 22, 22' bzw. 23, 23' und den Tragarmen 17 bzw. 18 wird eine Lösung der Klemmbacken vom Rippengurt 5 unterstützt.

Die Einrichtung ist bei entsprechender Anpassung ihrer Elemente auch geeignet, Paneele der genannten Art so umzuformen, dass die Behäutung 2 bzw. deren Aussenfläche 3 einen nach innen gewölbten Verlauf erhält.

Dazu werden die in Richtung der Wölbung verlaufenden Verstärkungsrippen 5 mittels der Einrichtung 10, im Sinne einer bleibenden Verformung, durch eine entsprechende Zugeblastung gelängt.

**Patentansprüche**

1. Verfahren zur Biegeformung von Paneelen aus elastisches und plastisches Umformverhalten aufweisenden Werkstoffen, z.B. Aluminium, insbesondere für die Beplankung der Zelle von Luftfahrzeugen, die aus einer glatten Behäutungsaussenseite mit einseitigen, rechtwinklig zu der Behäutung (2) angeordneten Versteifungsrippen (5) besteht, dadurch gekennzeichnet, dass die Umformung der Paneele (1) allein durch eine plastische, geradlinige Längenänderung der sich in Richtung des Wölbungsverlaufes erstreckenden Versteifungsrippen (5) bewirkt wird, wobei die Einleitung der Umformkräfte an den Versteifungsrippen (5) in einem solchen Abstand von der Behäutung (2) erfolgt, dass das Paneel (1) einem Spannungsverlauf mit innerhalb der Behäutung (2) liegender neutraler Faser unterworfen ist.

2. Umformeinrichtung zur Durchführung des Verfahrens nach Anspruch 1, mit gegeneinander arbeitenden Umformgliedern, dadurch gekennzeichnet, dass

a) die Einrichtung in Richtung der Längserstreckung der einer Längenänderung zu unterwerfenden Rippengurte relativ zueinander verstellbare Zangenglieder (15, 16; 17, 18) aufweist, dass

b) jedes der Glieder (15, 16) ein oder mehrere Klemmbackenpaare (22, 22' bzw. 23, 23') trägt und dass

c) die Klemmbacken (22, 22' bzw. 23, 23') eines jeden Paares zur Anlage an den Rippengurten (5) von den Zangengliedern relativ gegeneinander verstellbar aufgenommen sind.

3. Einrichtung nach Anspruch 2, dadurch gekennzeichnet, dass die Backen (22, 22'; 23, 23') zur Erzielung eines Klemmschlusses mit den Rippengurten (5) geneigte Führungsflächen (48) besitzen, die mit entsprechend geneigten Gegenflächen (48') an den Tragarmen (17 bzw. 18) zusammenwirken.

4. Einrichtung nach Anspruch 2 oder 3, dadurch gekennzeichnet, dass die Träger (15 bzw. 16) für die Aufnahme der Klemmbackenpaare (22, 22' bzw. 23, 23') auf einer gemeinsamen Trägerachse (14) angeordnet sind, wobei einer der Träger (15) mittels einer Verstelleinrichtung (12) axial verstellbar und der zweite Träger (16) einstell- und feststellbar ist.

5. Einrichtung nach Anspruch 2 bis 4, dadurch gekennzeichnet, dass der mit der Verstelleinrichtung (12) zusammenwirkende Träger (15) zur Änderung des axialen Abstandes der Umformglieder (22, 22' bzw. 23, 23') auf der Trägerachse (14) verstellbar und der zweite Träger (16) auf der Trägerachse (14) in vorbestimmten, axialen Stellungen feststellbar ist.

6. Einrichtung nach Anspruch 2 bis 5, dadurch gekennzeichnet, dass der verstellbare Träger (15) Teil eines Druckzylinders (41) ist, der mit einem sich an der Trägerachse (14) abstützenden Stellkolben (40) zusammenwirkt.

7. Einrichtung nach einem der Ansprüche 2 bis 6, dadurch gekennzeichnet, dass die Trägerachse (14) ein axial einstellbares und feststellbares Hubbegrenzungsglied (31) aufnimmt.

8. Einrichtung nach Anspruch 2 bis 7, dadurch gekennzeichnet, dass zwischen dem axial auf der Trägerachse (14) verstellbaren Träger (15) und dem Hubbegrenzungsglied (31) bzw. der Trägerachse (14) eine Rückstellfederanordnung (32) eingesetzt ist.

9. Einrichtung nach einem der Ansprüche 2 bis 8, dadurch gekennzeichnet, dass Einsatzstücke (55) vorgesehen sind, die mittels Backen (56) die Rippengurte (5) und bzw. oder die Stringer (4) auf einem Abschnitt ihrer Längserstreckung umgreifen und einen Ansatzsteg (58) für den Angriff der Klemmbackenpaare (22, 22' bzw. 23, 23') der Einrichtung aufweisen, der in Abmessung und Lage der Fortsetzung der Rippengurte (5) entspricht.

**Claims**

1. A method of shaping and bending panels of materials exhibiting elastic and plastic behaviour when shaped, for example aluminium, intended in particular for cladding the airframe of aircraft, the said airframe comprising a smooth outside skin with onesided reinforcing ribs (5) disposed at right-angles to the skin, characterised in that shaping of the panels (1) is brought about solely by a plastic rectilinear variation in the lenght of the reinforcing ribs (5) which extend in the direction of curvature, the shaping forces being introduced into the reinforcing ribs (5) at such a distance from the skin (2) than the panel (1) is subjected to a stress pattern with a neutral filament located within the skin (2).

2. Shaping apparatus for carrying out the method of claim 1, with oppositely working shaping members, characterised in that:

a) the apparatus has clamp members (15, 16, 17, 18) adjustable in relation to one another in the direction of the lenght of the rib flanges which are to be subjected to a variation in length, in that

b) each of the members (15, 16) carries one or a plurality of pairs of clamping jaws (22, 22' or 23, 23'), and in that

c) the clamping jaws (22, 22' or 23, 23') of each pair are received by the clamp members so as to be adjustable in relation to one another in order to ensure that they can be applied flush against the rib flanges (5).

3. Apparatus according to claim 2, characterised in that the jaws (22, 22': 23, 23') have inclined guide faces (48) to achieve a clamping fit against the rib flanges (5), the guide faces (48) co-operating with correspondingly inclined mating faces (48') on the support arms (17 or 18).

4. Apparatus according to claim 2 or 3, characterised in that the carriers (15 or 16) for receiving the pairs of clamping jaws (22, 22' or 23, 23') are disposed on a common carrier spindle (14), one of the carriers (15) being axially adjustable by means of an adjusting device (12) while the second carrier (16) is adjustable and lockable.

5. Apparatus according to claim 2 to 4, characterised in that, in order to vary the axial distance between the shaping members (22, 22', 23, 23') the carrier (15) which co-operates with the adjusting device (12) is adjustable on the carrier spindle (14) while the second carrier (16) can be locked in predetermined axial positions on the carrier spindle (14).

6. Apparatus according to claim 2 to 5, characterised in that the adjustable carrier (15) is part of a pressure cylinder (41) which co-operates with a servo piston (40) braced on the carrier spindle (14).

7. Apparatus according to one of claims 2 to 6, characterised in that the carrier spindle (14) carries an axially adjustable and lockable travel limiting member (31).

8. Apparatus according to claim 2 to 7, characterised in that a return spring arrangement (32) is incorporated between the carrier (15) which is axially adjustable on the carrier spindle (14) and the travel limiting member (31) or carrier spindle (14).

9. Apparatus according to one of claims 2 to 8, characterised in that inserts (55) are provided which, by a means of jaws (56) engage around a portion of the lenght of the rib flanges (5) and/or stringers (4), the said inserts having, corresponding in dimensions and location to the extension of the rib flanges (5), a stop member (58) against which the pairs of clamping jaws (22, 22' or 23, 23') can be applied.

**Revendications**

1. Procédé de formage par flexion de panneaux en matériaux présentant un comportement à la déformation élastique et plastique, tel que de l'aluminium, notamment pour le bordage des cellules d'aéronefs constitué par une peau extérieure lisse et des nervures de renforcement disposées à l'intérieur et perpendiculairement à la peau, caractérisé en ce que le formage des panneaux (1) est réalisé uniquement par une modification plastique et rectiligne de la longueur des nervures de renforcement (5) s'étendant en direction de la courbure, l'application des forces de formage aux nervures de renforcement (5) s'effectuant à une distance de la peau (2) telle que le panneau (1) soit soumis à une tension de la fibre neutre située à l'intérieur de la peau (2).

2. Dispositif de formage pour la mise en oeuvre du procédé selon la revendication 1, comprenant des éléments de formage fonctionnant l'une contre l'autre, caractérisé en ce que

a) le dispositif comprend, en direction de la dimension en longueur d'une nervure transversale de liaison qui doit être soumise à une modification de longueur, des éléments de pincement (15, 16; 17, 18) relativement mobiles les uns par rapport aux autres,

b) chacun des éléments (15, 16) comprend une ou plusieurs paires de mâchoires de serrage (22, 22' ou 23, 23'), et

c) les mâchoires de serrage (22, 22' ou 23, 23') de chaque paire sont montées de façon à pouvoir être réglées l'une par rapport à l'autre sur les éléments de pincement en vue de leur application sur les nervures transversales de liaison (5).

3. Dispositif selon la revendication 2, caractérisé en ce que les mâchoires (22, 22'; 23, 23') présentent, en vue d'obtenir un effet de serrage sur les nervures transversales de liaison (5) des surfaces de guidage appropriées (48) qui coopèrent avec des contre-surfaces appropriées (48) des bras porteurs (17 ou 18).

4. Dispositif selon la revendication 2 ou 3, caractérisé en ce que les supports (15 ou 16) destinés aux paires de mâchoires de serrage (22, 22' ou 23, 23') sont disposés sur un axe porteur commun (14), l'un des supports (15) pouvant être réglé axialement au moyen d'un dispositif de réglage (12) et le second support (16) pouvant être ajusté et fixé.

5. Dispositif selon l'une quelconque des revendications 2 à 4, caractérisé en ce que le support (15) qui coopère avec le dispositif de réglage (12) pour modifier la distance axiale entre les éléments de formage (22, 22' ou 23, 23') est réglable sur l'axe de support (14) et en ce que le second support (16) peut être fixé sur l'axe du support (14) dans des positions axiales prédéterminées.

6. Dispositif selon l'une quelconque des revendications 2 à 5, caractérisé en ce que le support réglable (15) fait partie d'un vérin de compression (41) qui coopère avec un piston de réglage (40) s'appuyant sur l'axe de support (14).

7. Dispositif selon l'une quelconque des revendications 2 à 6, caractérisé en ce que l'axe de support (14) supporte un élément limitateur de course (31) réglable et fixable axialement.

8. Dispositif selon l'une quelconque des revendications 2 à 7, caractérisé en ce qu'un agencement à ressort de rappel (32) est monté entre le support (15) qui peut être réglé axialement sur l'axe (14) et l'élément limitateur de course (31) ou l'axe de support (14).

9. Dispositif selon l'une quelconque des revendications 2 à 8, caractérisé en ce que sont prévus des éléments rapportés (55) qui entourent au moyen de mâchoires (56) les nervures transversales de liaison et/ou les nervures longitudinales de raidissement (4) sur une section de leur longueur et présentent une branche (58) pour la prise des paires de mâchoires de serrage (22, 22' ou 23, 23') du dispositif, qui correspond en dimension et par sa position au prolongement de la nervure transversale de liaison (5).

Fig.1

Fig.4

Fig.5

Fig. 2

Fig. 3

Fig. 6